Europäisches Patentamt

(19) European Patent Office

Office européen des brevets

(11) EP 1 116 697 B1

(12) **EUROPEAN PATENT SPECIFICATION**

(45) Date of publication and mention
of the grant of the patent:
**07.09.2005 Bulletin 2005/36**

(51) Int Cl.⁷: **C03B 37/018**, G02B 6/16

(21) Application number: **01100832.3**

(22) Date of filing: **15.01.2001**

(54) **Preform for dispersion-managed optical fibre and method of fabricating the preform by modified chemical vapour deposition**

Vorform für optische Faser mit kontrollierter Dispersion und Verfahren zu ihrer Herstellung durch modifizierte chemische Dampfabscheidung

Preforme pour fibres optiques à dispersion controllée et procédé de sa fabrication par dépot chimique modifié en phase vapeur

(84) Designated Contracting States:
**DE FR GB**

(30) Priority: **14.01.2000 KR 2000001742**

(43) Date of publication of application:
**18.07.2001 Bulletin 2001/29**

(73) Proprietor: **SAMSUNG ELECTRONICS CO., LTD.
Kyungki-do (KR)**

(72) Inventors:
• **Lee, Jae-Deuk
  Jeongeup-shi, Jeonrabuk-do (KR)**
• **Park, Yong-Woo
  Jongro-gu, Seoul (KR)**
• **Song, Ghie-Hugh
  Seocho-gu, Seoul (KR)**
• **Park, Un Chul Samsung Electronics Co. Ltd.
  Pundang-Gu, Sungnam-Shi, Kyunggi-Do (KR)**
• **Do, Mun-Hyun Samsung Electronics Co.Ltd.
  Gu, Sungnam-Shi, Kyunggi-do (KR)**

(74) Representative: **Grünecker, Kinkeldey,
Stockmair & Schwanhäusser Anwaltssozietät
Maximilianstrasse 58
80538 München (DE)**

(56) References cited:
**US-A- 4 049 413          US-A- 4 076 380**
**US-A- 4 857 091**

• **PATENT ABSTRACTS OF JAPAN vol. 5, no. 58,
  21 April 1981 (1981-04-21) -& JP 56 009236 A
  (FUJITSU LTD), 30 January 1981 (1981-01-30)**
• **PATENT ABSTRACTS OF JAPAN vol. 5, no. 62,
  25 April 1981 (1981-04-25) -& JP 56 014431 A
  (FUJITSU LTD), 12 February 1981 (1981-02-12)**
• **PATENT ABSTRACTS OF JAPAN vol. 5, no. 62,
  25 April 1981 (1981-04-25) -& JP 56 014433 A
  (FUJITSU LTD), 12 February 1981 (1981-02-12)**
• **PATENT ABSTRACTS OF JAPAN vol. 5, no. 67,
  7 May 1981 (1981-05-07) & JP 56 017941 A
  (FUJITSU LTD), 20 February 1981 (1981-02-20)**

## Description

The present invention relates generally to a method of fabricating an optical fiber preform, in particular a dispersion-managed optical fiber preform by modified chemical vapor deposition (MCVD).

Due to the wide bandwidth of optical fibers, optical communication has attracted much interest for long. The optical fibers have a bandwidth so wide that multiple telephone channels and TV channels may be transmitted through a strand of optical fiber as thin as a hair. The transmission capacity of an optical fiber increases as its dispersion value at a transmission wavelength decreases. An optical fiber having a dispersion value of zero at 1550nm, called a dispersion shifted fiber (DSF) has been suggested. Then, an erbium-doped fiber amplifier (EDFA) was developed. The EDFA can amplify an optical signal in a wide wavelength band ranging from 1530nm to 1565nm, thereby rendering the WDM (Wavelength Division Multiplexing) scheme viable and thus further increasing the optical transmission capacity. In the WDM scheme, optical signals of channels at different wavelengths are transmitted via one optical fiber. However, non-linear reaction between signals at different wavelengths like four-wave-mixing significantly deteriorates system performance in WDM optical communication using a DSF.

Andrew R. Chraplyvy solved this problem by introducing an optical fiber having a dispersion value of 2-6ps/km-nm in an optical transmission wavelength band, as disclosed in U. S. Patent No. 5,327,516 entitled "Optical Fiber for Wavelength Division Multiplexing". The optical fiber having a very low dispersion value for suppression of the non-linear effect is termed an NZDSF (Non-Zero DSF). Major NZDSFs are TrueWave (™) of Lucent Technology and LEAF(™) (Large Effective Area Advantage Fiber) of Corning. The recent TrueWave (™) RS optical fiber of Lucent Technology was designed to have low dispersion values at an L-band (Long-band 1565-1620nm) as well as at a C-band (Conventional-band 1530-1565nm), relative to conventional optical fibers. On the other hand, LEAF (™) of Corning has a wide effective area as compared to other optical fibers. For details, reference is made to U. S. Patent No. 5,835,655 entitled "Large Effective Area Waveguide Fiber" by Yanming Liu, et. al. Another advantage of the NZDSFs is wide effective areas in view of the fact that the non-linear effect of an optical fiber decreases as the effective area of the optical fiber increases.

Because the dispersion value of an NZDSF is very low but not zero, the product of the dispersion value and a transmission distance continues to increases when the transmission distance is long. As a result, dispersion inevitably results in pulse spreading. To solve this problem, so-called dispersion management was suggested in which two NZDSFs respectively having a positive dispersion value and a negative dispersion value are alternately connected to a dispersion accumulation and a transmission distance from exceeding a threshold. A dispersion-managed WDM system is an ideal optical transmission system.

To build a dispersion-managed line, optical fibers respectively having a positive dispersion value and a negative dispersion value are separately fabricated and then alternately connected. This conventional method makes it difficult to install optical communication cables because different kinds of optical fibers must be installed alternately along a long optical fiber line. What is needed is an improved technique for manufacturing dispersion-managed optical fibers from a preform prepared by one continuous session of the MCVD process.

US-A-4049413 describes a method for producing optical fibers which are drawn with diameter variations in the transmitting core but with uniform overall diameter. In this process the glass starting member used in fabricating the optical fiber preform is etched with appropriate groves. Additional glass is subsequently deposited on the etched starting member, and a fiber is drawn from the preform so fabricated

It is the object of the present invention to provide an improved method of fabricating a dispersion-managed optical fiber perform.

This object is achieved by the method of the independent claim. Preferred embodiments of the present invention are defined in the dependent claims.

With the method of the present invention a dispersion-managed fiber preform with a positive dispersion value for a first predetermined length and a negative dispersion value for a second predetermined length can be provided.

From this dispersion-managed fiber preform an optical fiber can be drawn having a positive dispersion value for a first predetermined length and a negative dispersion value for a second predetermined length.

The dispersion-managed fiber preform has different refractive index profiles along the length direction.

The dispersion-managed fiber preform also has the refractive index distributions of an NZDSF+ and an NZDSF-.

Thus, a core and a clad having the refractive index distribution of an optical fiber with a positive dispersion value are uniformly deposited in a glass tube. The preform with the positive dispersion value is heated at predetermined alternating portions with a heater and then the heated preform portions are etched, preferably with fluorine, to have a negative dispersion value. Then, the preform alternately having portions with the positive dispersion value and portions with the negative dispersion value along the length direction is collapsed. Thus, a dispersion-managed fiber preform is completed.

The above and other aspects, features and advantages of the present invention will become more apparent from the following detailed description when taken in conjunction with the accompanying drawings in which:

FIG. 1 is a schematic view of a general fiber preform fabricating apparatus using MCVD;

FIG. 2 illustrates the preform, the resulting optical fiber, and the local dispersion along the axial fiber length according to the present invention;

FIG. 3 illustrates the periodic etching of the MCVD tube to periodically change the refractive index profiles of the preform;

FIG. 4 is a graph showing the refractive index distribution of the dispersion-managed fiber preform according to the present invention; and

FIG. 5 is a graph showing dispersion spectra of an optical fiber having the refractive index distribution shown in FIG. 3 at 1530 to 1565nm.

A preferred embodiment of the present invention will be described hereinbelow with reference to the accompanying drawings. In the following description, well-known functions or constructions are not described in detail since they would obscure the invention in unnecessary detail.

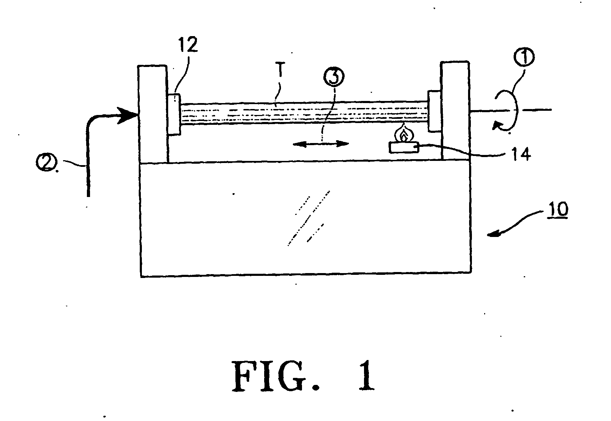

Referring to FIG. 1, MCVD will be described in brief. A glass tube T is fixed to both chucks 12 mounted on a horizontal shelf, rotated in the direction indicated by an arrow (1), and heated by a torch 14 while the torch 14 is rotated in the direction indicated by an arrow (3). At the same time, $SiCl_4$ and other chemical gases along with oxygen gas are injected into the glass tube T in the direction indicated by an arrow (2), for deposition inside the glass tube T. After the deposition, collapsing and closing are implemented. In this manner, a fiber preform is fabricated. The MCVD is well known to those that have ordinary knowledge in the field.

The MCVD is the process of supplying the $SiCl_4$ and other chemical gases along with oxygen gas the glass tube T, while heating the glass tube T by moving the torch at a predetermined rate, for uniform lengthwise deposition. This is a very difficult task.

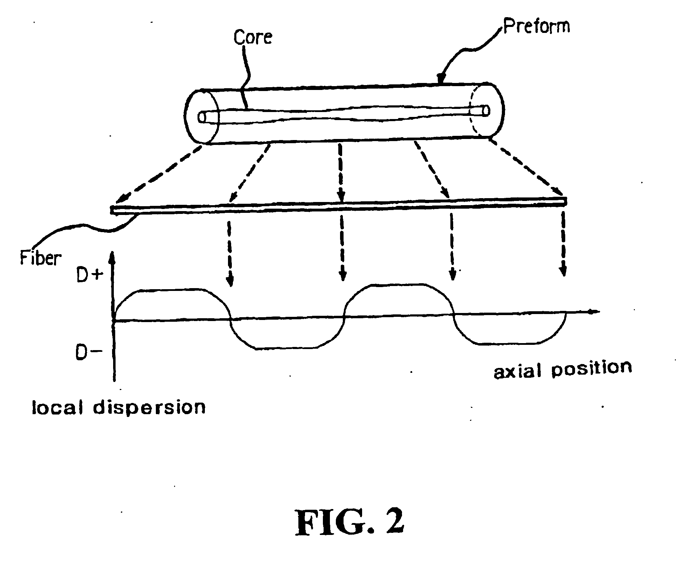

In order to fabricate an optical fiber cable having a positive dispersion value alternating with a negative dispersion value along the length direction of the fiber, an optical fiber preform must be developed in a controlled manner in which a refractive index distribution corresponding to the positive dispersion of the optical fiber for a first predetermined length alternates with a refractive index distribution corresponding to the negative dispersion of the optical fiber for a second predetermined length along the length direction. FIG. 2 illustrates such an optical fiber preform that exhibits this alternative refractive index characteristics. Accordingly, FIG. 2 illustrates the principle of eliminating signal distortion due to dispersion accumulation according to the present invention despite having a non-zero dispersion value in an optical transmission wavelength band.

The refractive index distribution of an optical fiber (NZDSF+) having a positive dispersion value as low as 2.56ps/km-nm in an optical transmission wavelength band and the refractive index distribution of an optical fiber (NZDSF-) having a negative dispersion value is provided so that an optical fiber preform exhibiting the characteristics of FIG. 2 is obtained. To this end, two different refractive index distributions must alternate periodically along the length direction in an optical fiber preform, which is fabricated by the modified chemical vapor deposition (MCVD) process in accordance with the present invention and has the same composition profile as the final fiber.

The present invention is intended to find out the refractive index distributions of the NZDSF+ and NZDSF- that enable fabrication of an optical fiber preform having the characteristics shown in FIG. 2 and to provide a method of fabricating the optical fiber preform by MCVD.

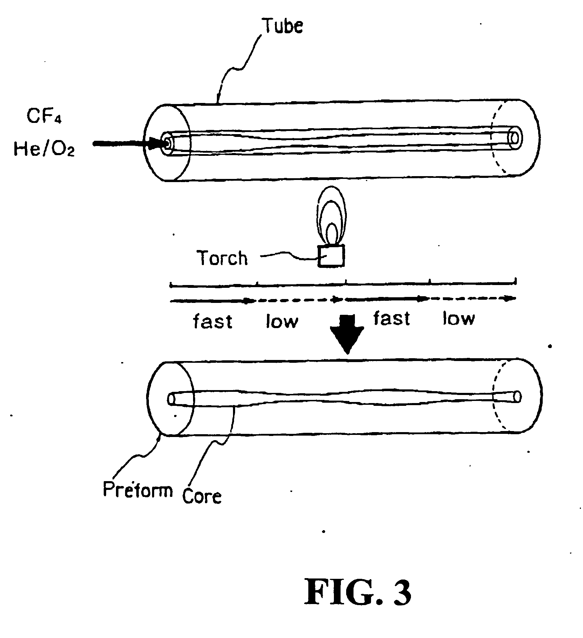

In the present invention, to induce a lengthwise change in a refractive index distribution in fabrication of an optical fiber preform by MCVD, the fiber preform is uniformly deposited along the length direction and selectively etched in intended portions for refractive index variation using a torch just before collapsing of a tube. Motion of a torch 14 is modulated to achieve periodic etching while $He/O_2$ gases mixed with F-containing gas such as $CF_4$ are flowed into the tube just prior to final sealing of the collapsed tube, as shown in FIG. 3.

The non-etched and etched sections of the preform should be designed to have positive and negative dispersion values, respectively. Therefore, the refractive index profile which has the positive dispersion in the original shape of the refractive index profile, and has the negative dispersion in the shape formed by internal etching should be found. The two index profiles also should satisfy all other nodal characteristics of the single-mode fiber waveguide such as the mode-field diameter, the cut-off wavelength, and the bending-loss requirement.

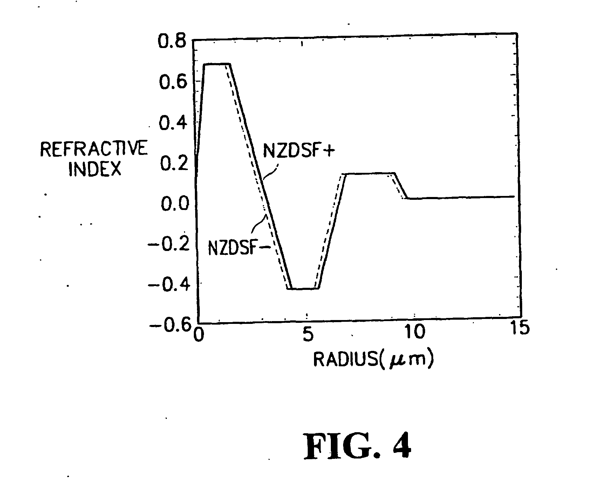

FIG. 4 is a graph showing a refractive index distributions of a dispersion-managed optical fiber preform satisfying the above-described condition according to the present invention. A refractive index difference in quantity, $\Delta(\%)$ is defined as

$$\Delta(\%) = [(n(r)-n_c)/n_c] \times 100 \qquad (1)$$

where $n_c$ is the refractive index of pure glass.

Thus, a fabrication of a dispersion-managed fiber from a preform prepared by a single session of the MCVD process is possible in the present invention.

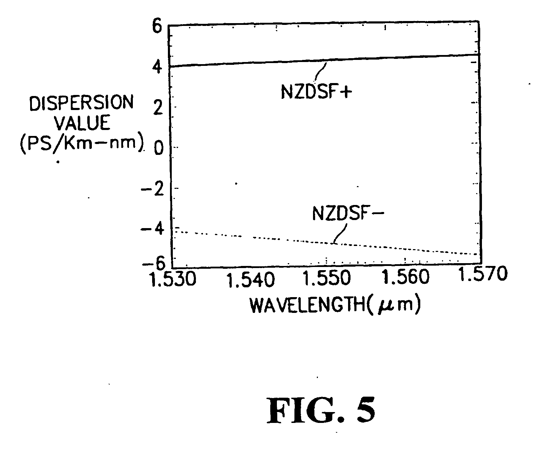

FIG. 5 illustrates dispersion values of optical fibers having the refractive index distribution shown in FIG. 4 in a wavelength band ranging from 1530 to 1565nm. A positive dispersion fiber (NZDSF+) has a positive inclination as wavelength increases, whereas a negative dispersion fiber (NZDSF-) has a negative inclination as wavelength increases, but they have the same magnitude of dispersion. Therefore, if the transmission fiber has the refractive index profiles shown in FIG. 4 periodically along the fiber length, complete dispersion management is achieved across the whole wavelength band of 1530 to 1565nm.

As to the positive dispersion fiber, a dispersion ranges from 4.10 to 4.36ps/km-nm at wavelengths from 1530 to 1565nm, a dispersion inclination at 1550nm is 0.0065ps/km-nm$^2$, an $LP_H$ mode cut-off wavelength is 1.17μm, and a mode filter diameter at 1550nm is 7.56μm.

As to the negative dispersion fiber, a dispersion ranges from -4.19 to -5.61ps/km-nm at wavelengths from 1530 to 1565nm, a dispersion inclination at 1550nm is -0.0358ps/km-nm$^2$, an $LP_H$ mode cut-off wavelength is 1.14μm, and a mode filter diameter at 1550nm is 8.39μm.

The optical fibers having the refractive index distribution shown in FIG. 4 have small dispersion inclinations at wavelengths as shown in FIG. 5. Therefore, they can be used as an excellent NZDSF+ and NZDSF-.

In accordance with the present invention, a dispersion-managed optical fiber is drawn from a single optical fiber preform, as effective as NZDSFs of a positive dispersion value and a negative dispersion value, respectively, that alternate with each other. When an optical fiber of a uniform diameter is drawn from an optical fiber preform according to the present invention and made into an optical cable, the cable itself becomes a dispersion management line. Furthermore, since positive and negative dispersion optical fibers having a refractive index distribution according to the present invention show very flat dispersion spectra at transmission wavelengths, they can be used as an excellent NZDSF+ and NZDSF-.

While the invention has been shown and described with reference to a certain preferred embodiment thereof, it will be understood by those skilled in the art that various changes in form and details may be made therein without departing from the scope of the invention as defined by the appended claims.

## Claims

1. A method of fabricating a dispersion-managed optical fiber preform, the method comprising the steps of:

    uniformly depositing a fiber preform structure with a positive dispersion value in a glass tube (T) by using modified chemical vapour deposition (MCVD), said preform structure comprising a core and a cladding;

    heating the preform structure with the positive dispersion value at predetermined alternating portions along the length direction with a heater (14) and internal etching the heated portions to have a negative dispersion value in portions of the preform structure which are formed by the etching step; and

    collapsing the glass tube.

2. The method of claim 1, wherein the step of etching the heated portions includes the step of injecting an F-containing gas into the tube.

3. The method of claim 2, wherein said F-containing gas is $CF_4$ or $C_2F_6$.

4. The method of any of claims 1 to 3, wherein periodic etching of the fiber preform structure with the positive dispersion value in the glas tube is achieved by the modulation of the torch motion while $He/O_2$ gases mixed with F-containing gas is injected into the tube.

## Patentansprüche

1. Verfahren zum Herstellen einer dispersionsgesteuerten Lichtleitfaser-Vorform, wobei das Verfahren die folgenden Schritte umfasst:

    gleichmäßiges Abscheiden einer Faser-Vorformstruktur mit einem positiven Dispersionswert in einer Glasröhre (T) unter Einsatz eines MCVD (modified chemical vapour deposition) -Verfahrens, wobei die Vorformstruktur einen Kern und einen Mantel umfasst;

    Erhitzen der Vorformstruktur mit dem positiven Dispersionswert an vorgegebenen abwechselnden Abschnitten in der Längsrichtung mit einer Heizeinrichtung (14) und inneres Ätzen der erhitzten Abschnitte, um in Abschnitten der Vorformstruktur, die durch den Ätzschritt ausgebildet werden, einen negativen Dispersionswert zu haben; und

    Kollabieren der Glasröhre.

2. Verfahren nach Anspruch 1, wobei der Schritt des Ätzens der erhitzten Abschnitte den Schritt des Einleitens eines F-haltigen Gases in die Röhre einschließt.

3. Verfahren nach Anspruch 2, wobei das F-haltige Gas $CF_4$ oder $C_2F_6$ ist.

4. Verfahren nach einem der Ansprüche 1 bis 3, wobei periodisches Ätzen der Faser-Vorformstruktur mit dem positiven Dispersionswert in der Glasröhre durch die Modulation der Brennerbewegung, während mit F-haltigem Gas vermischte $He/O_2$-Gase

eingeleitet werden, in die Röhre erreicht wird.

**Revendications**

1. Procédé de fabrication d'une ébauche de fibre optique gérée par dispersion, le procédé comprenant les étapes consistant à :

   déposer uniformément une structure d'ébauche de fibre avec une valeur de dispersion positive dans un tube en verre (T) à l'aide d'une déposition en phase gazeuse par procédé chimique modifiée (modified chemical vapour deposition ou MCVD), ladite structure d'ébauche comprenant un coeur et une gaine ;
   chauffer la structure d'ébauche avec la valeur de dispersion positive en des parties alternées prédéterminées le long de la direction de la longueur à l'aide d'un élément chauffant (14) et effectuer une gravure interne des parties chauffées de façon à avoir une valeur de dispersion négative dans les parties de la structure d'ébauche qui sont formées par l'étape de gravure ; et
   collapser le tube en verre.

2. Procédé selon la revendication 1, dans lequel l'étape de gravure des parties chauffées comprend l'étape d'injection d'un gaz contenant du F dans le tube.

3. Procédé selon la revendication 2, dans lequel ledit gaz contenant du F est du $CF_4$ ou du $C_2F_6$.

4. Procédé selon l'une quelconque des revendications 1 à 3, dans lequel la gravure périodique de la structure d'ébauche de fibre avec la valeur de dispersion positive dans le tube en verre est obtenue par la modulation du mouvement de chalumeau tandis que des gaz $He/O_2$ mélangés à un gaz contenant du F sont injectés dans le tube.

FIG. 1

**FIG. 2**

Tube

CF₄
He/O₂

Torch

fast    low    fast    low

Preform Core

# FIG. 3

**FIG. 4**

**FIG. 5**